(19) Europäisches Patentamt

European Patent Office

Office européen des brevets

(11) **EP 0 873 019 B1**

(12) **EUROPEAN PATENT SPECIFICATION**

(45) Date of publication and mention
of the grant of the patent:
**12.05.2004 Bulletin 2004/20**

(51) Int Cl.⁷: **H04N 7/52**, H04N 7/06,
G06F 13/42, H04N 7/24

(21) Application number: **97306194.8**

(22) Date of filing: **14.08.1997**

(54) **Device and method for transmitting digital audio and video data**

Vorrichtung und Verfahren zum Übertragen von digitalen Audio- und Videodaten

Dispositif et procédé pour transmettre des données numériques audio et vidéo

(84) Designated Contracting States:
**DE FR GB**

(30) Priority: **15.04.1997 KR 9713864**

(43) Date of publication of application:
**21.10.1998 Bulletin 1998/43**

(73) Proprietor: **SAMSUNG ELECTRONICS CO., LTD.**
**Suwon-City, Kyungki-do (KR)**

(72) Inventor: **Sung, Kwan-soo**
**Seocho-gu, Seoul (KR)**

(74) Representative: **Chugg, David John et al**
**Appleyard Lees,**
**15 Clare Road**
**Halifax, West Yorkshire HX1 2HY (GB)**

(56) References cited:
- BLOKS R H J: "The IEEE-1394 high speed serial bus" PHILIPS JOURNAL OF RESEARCH,ELSEVIER, AMSTERDAM,NL, vol. 50, no. 1, 1996, pages 209-216, XP004008212 ISSN: 0165-5817
- KUNZMAN A J ET AL: "1394 HIGH PERFORMANCE SERIAL BUS: THE DIGITAL INTERFACE FOR ATV" IEEE TRANSACTIONS ON CONSUMER ELECTRONICS,US,IEEE INC. NEW YORK, vol. 41, no. 3, 1 August 1995 (1995-08-01), pages 893-900, XP000539552 ISSN: 0098-3063
- HOFFMAN G ET AL: "IEEE 1394: A UBIQUITOUS BUS" DIGEST OF PAPERS OF THE COMPUTER SOCIETY COMPUTER CONFERENCE (SPRING) COMPCON,US,LOS ALAMITOS, IEEE COMP. SOC. PRESS, vol. CONF. 40, 5 March 1995 (1995-03-05), pages 334-338, XP000545446 ISBN: 0-7803-2657-1

EP 0 873 019 B1

**Description**

The present invention relates to a communication device for transmitting digital audio and video data in an isochronous communication mode. More specifically, when digital audio and video data according to a standard definition (SD) is transmitted to another digital data device, the invention decides whether to transmit an empty packet or a DIF source packet for respective isochronous cycles, and controls transmission of the packets, whereby the invention is capable of transmitting digital audio and video data at a uniform data transfer rate in a predetermined margin.

Development of computer technology in recent years introduced a digital multimedia era by linking computers with electronic home appliances. The computer technology allowing development of digital multimedia growth includes (a) improved technology of various digital multimedia equipment such as digital video cassette recorders (VCR) and digital camcorders and (b) interface technology which enables the multimedia equipment to be linked with each other. One of the most well-known interfaces is the IEEE 1394 interface. The IEEE 1394 interface is a standard bus interface definition conventionally used to network personal computers, portable computers and other digital systems which operate independently.

A summary of the IEEE-1394 high speed serial bus is given in BLOKS RHJ: "The IEEE-1394 high speed serial bus" Philips Journal of Research, Elsevier, Amsterdam, NL, col 50, no.1, 1996, pages 209-216, XP004008212.

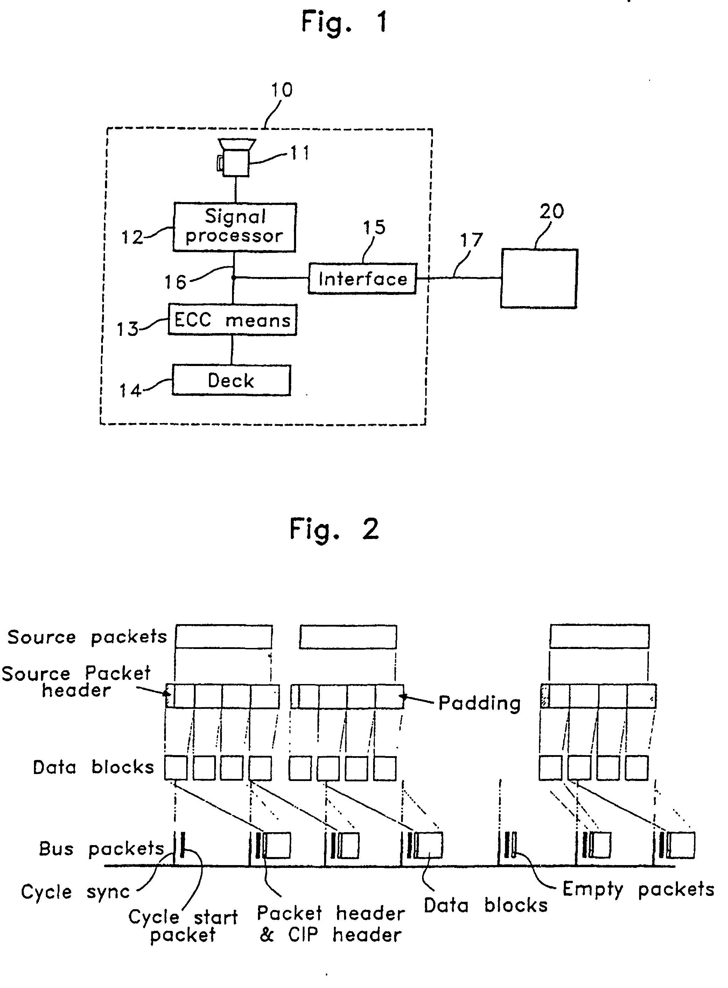

Figure 1 is a block diagram of a multimedia system for data-communication with a digital camcorder using the IEEE 1394 interface. The multimedia system includes (1) a camera 11 for recording real world images and generating audio and/or video signals, (2) a signal processor 12 for processing the signals and producing audio and/or video information, (3) error correcting code means (ECC) 13 for appending error correcting code to the audio and/or video information, (3) error correcting code means (ECC) 13 for appending error correcting code to the audio and/or video information, (4) a deck 14 for storing the information, (5) an interface 15 for interfacing the system 10 with another multimedia system 20 to provide mutual communication and (6) communicating means 17, which may be implemented by IEEE 1394 for performing digital communication between the multimedia systems 10 and 20. The data communication between the components of the multimedia system 10 is performed through inner bus 16.

When a frame is transmitted on the inner bus 16 during a bus interval, the inner bus 16 exhibits a high transfer rate at specific parts of the interval and stays idle during other parts to provide efficient audio and video data transmission within the device. The characteristics of the bus system are well known to those skilled in this art.

Figure 2 shows a model of transmission of a stream of source packets from one digital device to another. A source packet may be split into 1, 2, 4 or 8 data blocks, and zero or more data blocks are contained in an IEEE 1394 isochronous packet. A receiver of the packet collects the data blocks in the isochronous packet and combines them to reconstruct the source packet for delivery to the application.

The source packets should be modified to comply with both the specification and the definitions for IEEE 1394 and DVC DIF(digital video cassette digital interface) to allow transmission from one digital device (e.g., a digital camcorder 10 shown in Figure 1) to another digital device (e.g., a multimedia device 20 shown in Figure 1). These IEEE 1394, SD specifications and definitions are commonly known by those skilled in this art so that only a few brief comments are sufficient before describing the operation of the present invention.

[Definition 1] Data transmission according to Standard Definition-Video Cassette Recorder Digital InterFace(SD-VCR DIF) should be applied with the following time conditions.

Start timing information of one frame should be transmitted to the receiver. The start timing information is carried in CIP header in the source packet of the frame, as time stamp information. The CIP header is placed at the beginning of the data field of an IEEE 1394 isochronous packet and contains information on the type of the real time data contained in the data field following the CIP header.

An $n^{th}$ data block of an $M^{th}$ video frame should be transmitted in a packet which meets the following conditions. (n = 0 ··· K-1)

$$Packet\_arrival\_time\_L \leq T_n$$

$$T_n - Transmission\_delay\_limit \leq Packet\_arrival\_time\_F$$

where

$T_n$ is the nominal timing for data block n,

$$T_n = T_M - (T_{M+1} - T_M)*n/K$$

Packet_arrival_time_L: The cycle time when the last bit of the packet which includes data block n arrives in the receiver.

Packet_arrival_time_F: The cycle time when the first bit of the packet which includes data block n arrives in the receiver.

$T_M$ is the time stamp for video frame M.

Transmission_delay_Limit = 450 µs

K is the number of source packets in a video frame. For example,

$$K = 250 \ (525\text{-}60 \ system)$$

K= 300 (625-50 system)

The time conditions for frame transmission are generally described above. More detailed specifications are described in the Digital Interface and the CIP Header in the Blue Book of SD-VCR, published in December, 1995.

From the above definition, it is noted that the 250 or 300 source packets should be uniformly distributed in a fixed margin to allow data transmission between digital data devices.

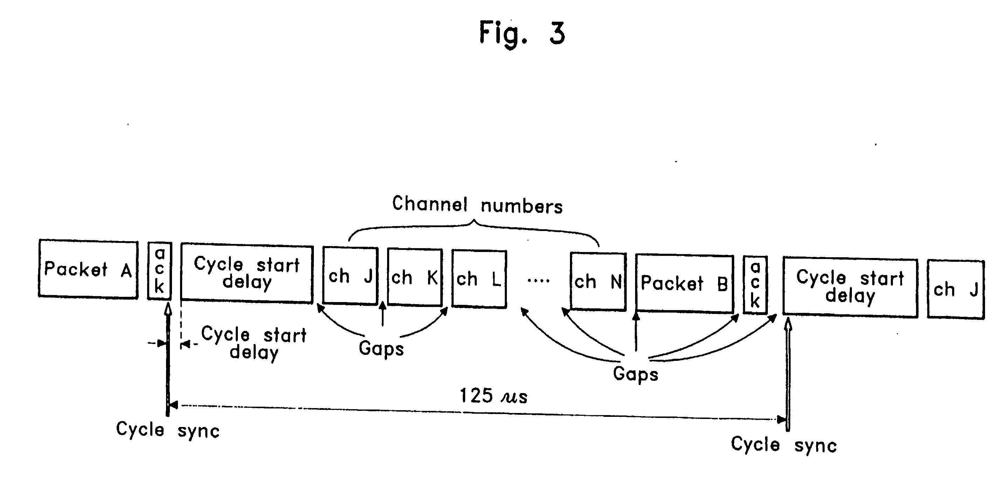

[Definition 2] Isochronous transmission of IEEE 1394 operates by transmitting isochronous packets, responding to a cycle sync every 125 μs as shown in Figure 3. Detailed specifications on the IEEE 1394 are described in the standard published in 1995.

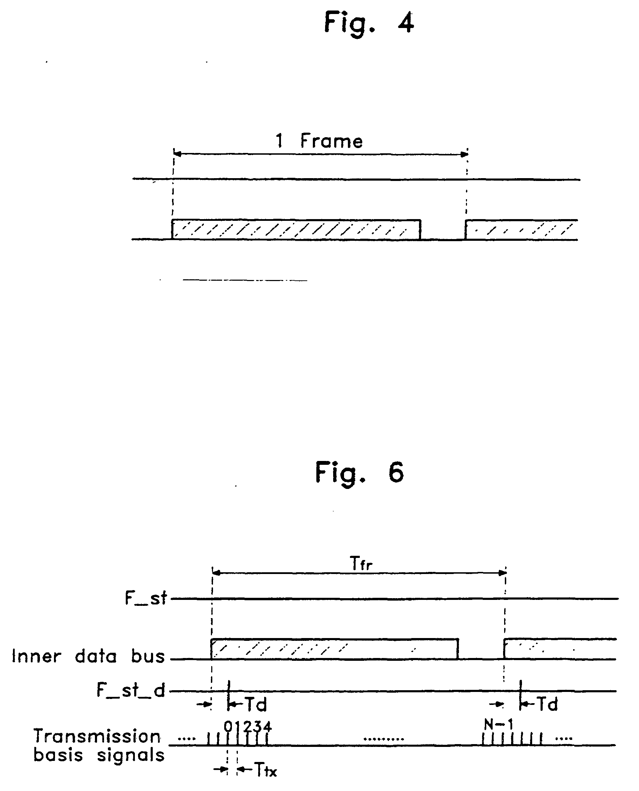

Figure 4 shows the state of the inner bus 16 during transmission of one frame of data. As set forth above, the inner bus of the digital camcorder 10 usually has a high transfer rate at only specific parts in the frame.

The following observations are derived from the above definitions.

In the case of the 525-60 system (i.e., National Television System Committee: NTSC), the number of source packets is 250 per frame and the number of cycle sync per frame is approximately 266.9. As a result, in the 525-60 system, empty packets without data should be allocated to 16 or 17 isochronous cycles in order to transmit image information of a frame through the IEEE 1394 bus. Accordingly, the timing of the inner bus of the digital camcorder should be synchronized with the output timing through the IEEE 1394 bus. The empty packet insertion is to be determined to conform with [Definition 1, ② ].

In order to synchronize the transfer rate of the inner bus of digital devices (e.g., a camcorder) and the transfer rate of IEEE 1394 bus under [Definition 1, ② ], the steps of buffering transmission data using a memory, for example, and controlling the output timing of the transmission data from the memory are required.

An aim of embodiments of the present invention is to provide transmission in accordance with definitions of the SD-format digital interface in communication devices with an isochronous communication mode like the digital data transmission and reception definitions of IEEE 1394.

According to the present invention there is provided an apparatus and method as set forth in the appended claims. Preferred embodiments of the invention are set out in the appended claims.

For a better understanding of the invention, and to show how embodiments of the same may be carried into effect, reference will now be made, by way of example, to the accompanying diagrammatic drawings, in which:

Figure 1 is a block diagram of a multimedia system for data-communication with a common digital camcorder through an IEEE 1394 interface;

Figure 2 is a model of the transmission scheme for communication a stream of source packets from one digital device to another digital device;

Figure 3 is a timing chart of a cycle structure according to IEEE 1394;

Figure 4 is a timing chart of the state of the inner bus of a digital device during transmission of the data in one frame;

Figure 5 is a block diagram of a device for transmitting audio and/or video data according to an embodiment of the present invention;

Figure 6 is a timing chart of operation of a timing simulator of the device in Figure 5; and

Figure 7 is a timing chart of operation of a transmission timing controller and a transmitter of the device in Figure 5.

Technical terms used throughout the following description are defined on the basis of the functions of the present invention. Therefore, the terms may be substituted by other appropriate terms within the understanding of those skilled in this art

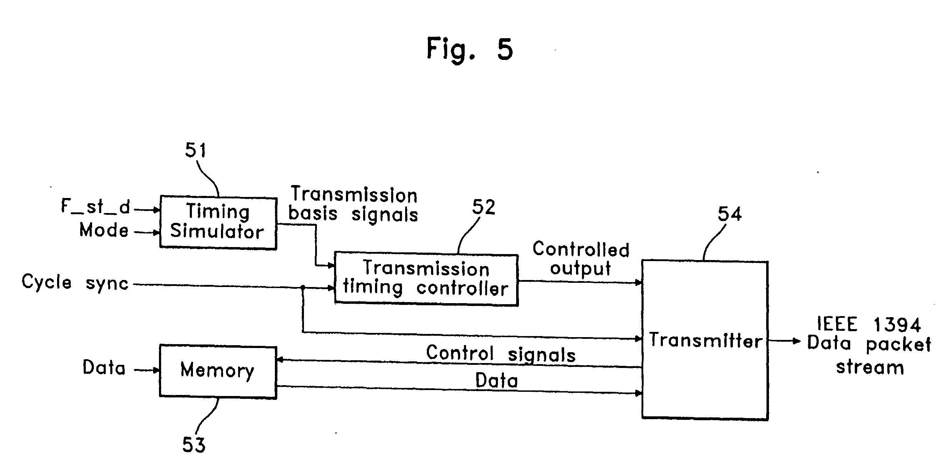

Figure 5 is a block diagram of a device for transmitting audio and/or video data according to an embodiment of the present invention. As shown in the drawing, there is provided: a timing simulator 51 for outputting transmission basis signals; a transmission timing controller 52 for generating controlled output for transmitting packets at every cycle sync; a memory 53 for temporarily storing data to be transmitted; and a transmitter 54 for receiving the data from the memory 53, and composing and transmitting packets according to the controlled output and the cycle sync.

The timing simulator 51 receives a frame start delay signal F_st_d signal that is obtained by delaying a frame start signal F_st signal, corresponding to the beginning of the transmission of the first source packet in a frame of the inner bus of a camcorder, by a predetermined length of time. The timing simulator 51 also receives mode signals indicating whether the data is in NTSC mode or in PAL mode. The timing simulator 51 then outputs transmission basis signals according to the F_st_d signals and the mode signals.

The transmission timing controller 52 receives the transmission basis signals and generates controlled output for transmitting packets at every cycle sync occurring every 125 μs, such that when a cycle sync occurs in a transmission basis signal interval, a packet with source packet data is transmitted at the cycle sync and when two cycle syncs occur in a transmission basis signal interval, a packet with source packet data is transmitted at only one of the two cycle syncs and an empty packet without data is transmitted at the other cycle sync.

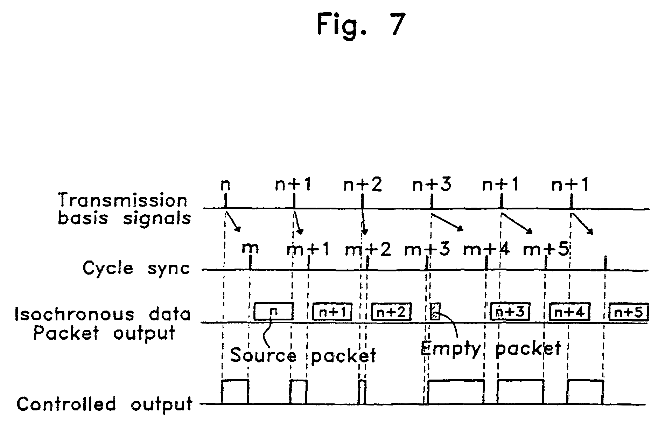

Referring to Figure 6, the timing simulator outputs transmission basis signals at every $T_{ix}$ interval according to the signal mode (NTSC mode or PAL mode). $T_{ix}$ represents a time fragment of a frame divided into 250 or 300 source packets. Td in Figure 6 shows a time delay for filling the memory 53 with transmission data to buffer the transmission data. Operators may determine the length of this delay, which may be used for buffering the data in a memory.

In other words, the operator determines a length of time as the time delay that is consumed to store data in the memory 53 so that the transmitter of the present invention does not cause underflow during the transmission of the data. Such time delay is determined in accordance with the data transfer rate of the inner data bus of a digital system (e.g., camcorder) that is going to transmit the data.

In a preferred embodiment of the present invention, the consumed time (i.e., the time delay $T_d$) is the length of time taken to store one source packet in the memory 53.

To allow the operator to determine the time delay $T_d$, the present invention includes: an input device (not shown) for receiving the time delay $T_d$ from the outside; and a timing controller (not shown) for generating a frame start signal F_st signal, corresponding to the beginning of the transmission of the first source packet in a frame of the inner data bus, and generating a frame start delay signal F_st_d signal that is obtained by delaying the F_st signal by the time delay $T_d$ and inputting the F_st_d signal into the timing simulator 52.

Figure 7 is a timing chart of operation of the transmission timing controller 52 and the transmitter 54. As shown in the drawing, a cycle of the transmission basis signal is 133.5 μs in 525-60 system (i.e., NTSC system) and is 133.3 μs in 625-60 system (i.e., PAL system). In both systems, the cycle of the transmission basis signal is longer than the cycle of the cycle sync for the IEEE 1394, which is 125 μs.

The transmission timing controller 52 generates controlled output signals which are set (i.e., shown as rising edges in Figure 7) responsive to transmission basis signals and are reset (i.e., shown as falling edges in Figure 7) responsive to cycle syncs.

The transmitter 54 transmits packets at every cycle sync such that when the controlled output signal is in the reset state, an empty packet without data is transmitted through a communication wire (not shown) and when the controlled output signal is in the set state, a packet with data that is read from the memory 53 is transmitted through the communication wire (not shown).

System clocks supplied to the respective blocks shown in Figure 5 are commonly known in digital circuits, which is therefore omitted in the timing chart of Figure 7.

Referring to Figure 7, the transmission of the data packets and the empty packets will be described.

As aforementioned, the cycle of transmission basis signal is longer than the cycle of the cycle sync. Therefore, one or two cycle syncs may occur in a transmission basis signal interval.

Therefore, at the first cycle sync after an $n^{th}$ transmission basis signal following the frame start delay signal F_st_d, an $n^{th}$ source packet is transmitted. At the first cycle sync after $(n+2)^{th}$ transmission basis signal, an $(n+2)^{th}$ source packet is transmitted and at the second cycle sync (shown as $(m+3)^{th}$ cycle sync) after the transmission basis signal, an empty packet is transmitted. In this manner, the data distribution can be controlled in a predetermined margin and provide a uniform data transfer rate defined with respect to SD-VCR DIF.

While there have been shown what are presently considered to be preferred embodiments of the invention, it will be apparent to those skilled in the art that various changes and modifications can be made without departing from the scope of the invention as defined by the appended claims.

For example, a value of the frame start delay F_st_d inputted into the timing simulator 51 and a value for designating the mode of a color television transmit-receive mode (e.g., NTSC, PAL, and so on) may be predesignated in the timing simulator 51.

Therefore various embodiments according to the present invention may be made within the scope of the present invention by anyone skilled in the art.

As discussed above, the device and method for transmitting digital audio and/or video data is capable of making the different data transfer rates of the inner bus of the digital device (e.g., a camcorder) and IEEE 1394 bus corresponding to the data transfer rate defined with respect to SD-VCR DIF, thereby satisfying the specifications for an SD-format digital interface.

**Claims**

1. A device for transmitting digital audio and video data, which transmits a stream of source packets from a first digital device to a second digital device according to a transmission specification in an isochronous transmission mode, comprising:

a memory (53) for storing the source packets;

**characterised by**:

transmission time controlling means (51, 52) for controlling a point of time for transmitting source packets and empty packets in order to convert the transmission timing of an inner bus of the first digital device to a timing predesignated in the transmission specification; and

transmitting means (54) for inserting and transmitting the empty packets under control of said transmission time controlling means (51, 52) while the source packets stored in said memory (53) are transmitted according to control signals.

2. The device of Claim 1, wherein said transmission time controlling means includes:

a timing simulator (51) for receiving predetermined signals and a predetermined mode signal in order to transmit a stream of the source packets, and outputting transmission basis signals corresponding to the predetermined signals and the mode signal; and
a transmission timing controller (52) for receiving the transmission basis signals and cycle syncs generated every predetermined length of time, and generating controlled output for transmitting the packets according to predetermined rules.

3. A method for transmitting a stream of source packets from a first digital device to a second digital device according to a transmission specification in an isochronous transmission mode, comprising the steps of:

receiving predetermined timing signals derived from the transmission timing of an inner bus of the first digital device and a predetermined mode signal in order to transmit said stream of the source packets, and outputting transmission basis signals corresponding to said predetermined signals and said mode signal; and

receiving said transmission basis signals and cycle syncs generated every predetermined time period, and transmitting said source packets and empty packets according to predetermined rules,

wherein, according to said predetermined definitions, when one cycle sync occurs in a transmission basis signal interval, a packet with source packet data that is valid in the cycle sync is transmitted at the cycle sync, and when two cycle syncs occur in a transmission basis signal interval, a packet with source packet data is transmitted at only one of the two cycle syncs and an empty packet without data is transmitted at the other cycle sync.

4. The device of Claim 2, or the method of claim 3, wherein said predetermined timing signals are generated after a predetermined length of time after a signal, indicating that a first source packet begins to be transmitted in a frame of the inner bus of the first digital device, is generated.

5. A device according to Claim 4 or a method according to claim 4, wherein said predetermined length of time is a length of time taken to store one of the source packets in said memory, i.e., a length of time taken to fill the source packets in said memory in order to buffer the source packets.

6. The device of Claims 4 or 5, wherein said transmission time controlling means further comprises:

inputting means for inputting said predetermined length of time from outside in order to determine said predetermined length of time; and

timing controlling means for generating said predetermined timing signals after said predetermined length of time.

7. The method of Claim 5, wherein said predetermined length of time is determined by an operator.

8. The device of Claim 2 or a method according to claim 3, wherein said predetermined mode signal indicates whether the data is in NTSC (National Television System Committee) mode.

9. The device of Claim 2 or a method according to claim 3, wherein said predetermined mode signal indicates whether the data is in PAL (Phase Alternation Line) mode.

10. The device of Claim 2 or a method according to claim 3, wherein said predetermined length of time is 125 $\mu$s.

11. The device of Claim 2, wherein said timing simulator outputs transmission basis signals, corresponding to said predetermined signals and said mode signal, for transmitting a stream of the source packets, said predetermined signals and said mode signal being predesignated signals not newly inputted signals.

12. The device of Claim 2, wherein, according to said predetermined rules, when one cycle sync occurs in a transmission basis signal interval, a packet with source packet data that is valid in the cycle sync is transmitted at the cycle sync; and when two cycle syncs occur in a transmission basis signal interval, a packet with source packet data is transmitted at only one of the two cycle syncs and an empty packet without data is transmitted at the other cycle sync.

**13.** The device of Claim 12 or a method according to claim 3, wherein said transmission basis signal interval is a cycle interval that is a time fragment of a frame divided into 250 when in NTSC mode.

**14.** The device of Claim 12 or a method according to claim 3, wherein said transmission basis signal interval is a cycle interval that is a time fragment of a frame divided into 300 when in PAL mode.

**15.** The device of Claim 1, or a method according to claim 3, wherein said transmission specification is IEEE 1394.

**16.** The method of Claim 3, wherein said transmission basis signals outputting step includes a step for outputting transmission basis signals, corresponding to said predetermined signals and said mode signals, for transmitting a stream of said source packets, said predetermined signals and said mode signals being predesignated signals not newly inputted signals.

**Patentansprüche**

**1.** Vorrichtung zum Übertragen digitaler Audio- und Videodaten, die entsprechend einer Übertragungsspezifikation in einem isochronen Übertragungsmodus einen Strom von Quellen-Paketen von einer ersten digitalen Vorrichtung zu einer zweiten digitalen Vorrichtung überträgt und die umfasst:

einen Speicher (53), der die Quellen-Pakete speichert;

**gekennzeichnet durch:**

eine Übertragungszeit-Steuereinrichtung (51, 52), die einen Zeitpunkt zum Übertragen von Quellen-Paketen und leeren Paketen steuert, um den Übertragungs-Zeitablauf eines inneren Busses der ersten digitalen Vorrichtung in einen Zeitablauf umzuwandeln, der in der Übertragungsspezifikation vorbestimmt ist; und

eine Übertragungseinrichtung (54), die die leeren Pakete von der Übertragungszeit-Steuereinrichtung (51, 52) gesteuert einfügt und überträgt, während die Quellen-Pakete, die in dem Speicher (53) gespeichert sind, Steuersignalen gemäß übertragen werden.

**2.** Vorrichtung nach Anspruch 1, wobei die Übertragungszeit-Steuereinrichtung enthält:

einen Zeitablauf-Simulator (51), der vorgegebene Signale und ein vorgegebenes Modus-Signal empfängt, um einen Strom der Quellen-Pakete zu übertragen, und Übertragungs-Basissignale entsprechend den vorgegebenen Signalen und dem Modus-Signal ausgibt; und

eine Übertragungs-Zeitablaufsteuerung (52), die die Übertragungs-Basissignale und Zyklussynchronisierungs-Signale empfängt, die zu jedem vorgegebenen Zeitabschnitt erzeugt werden, und einen gesteuerten Ausgang zum Übertragen der Pakete gemäß vorbestimmter Regeln erzeugt.

**3.** Verfahren zum Übertragen eines Stroms von Quellen-Paketen von einer ersten digitalen Vorrichtung zu einer zweiten digitalen Vorrichtung gemäß einer Übertragungs-Spezifikation in einem isochronen Übertragungsmodus, das die folgenden Schritte umfasst:

Empfangen vorgegebener Zeitablaufsignale, die von dem Übertragungs-Zeitablauf eines inneren Busses der ersten digitalen Vorrichtung hergeleitet werden, und eines vorgegebenen Modus-Signals, um den Strom der Quellen-Pakete zu übertragen, und Ausgeben von Übertragungs-Basissignalen entsprechend den vorgegebenen Signalen und dem Modus-Signal; und

Empfangen der Übertragungs-Basissignale und von Zyklus-Synchronisierungen, die zu jedem vorgegebenen Zeitraum erzeugt werden, und Übertragen der Quellen-Pakete und leerer Pakete gemäß vorgegebener Regeln,

wobei gemäß den vorgegebenen Definitionen, wenn eine Zyklus-Synchronisierung in einem Übertragungs-Basissignalintervall auftritt, ein Paket mit Quellen-Paketdaten, das in der Zyklus-Synchronisierung gültig ist, zu der Zyklus-Synchronisierung übertragen wird, und, wenn zwei Zyklus-Synchronisierung in einem Übertragungs-Basissignalintervall auftreten, ein Paket mit Quellen-Paketdaten zu lediglich einer der zwei Zyklus-Synchronisierung übertragen wird und ein leeres Paket ohne Daten zu der anderen Zyklus-Synchronisierung übertragen wird.

**4.** Vorrichtung nach Anspruch 2 bzw. Verfahren nach Anspruch 3, wobei die vorgegebenen Zeitablauf-Signale nach einem vorgegebenen Zeitabschnitt nach der Erzeugung eines Signals erzeugt werden, das anzeigt, dass die Übertragung eines ersten Quellen-Paketes in einem Rahmen des inneren Busses der ersten digitalen Vorrichtung beginnt.

**5.** Vorrichtung nach Anspruch 4 oder Verfahren nach Anspruch 4, wobei der vorgegebene Zeitabschnitt ein Zeitabschnitt ist, der erforderlich ist, um eines der Quellen-Pakete in dem Speicher zu speichern, d.h. ein Zeitabschnitt, der erforderlich ist, um die Quellen-Pakete in dem Speicher zu füllen, und so die Quellen-Pakete zu puffern.

6. Vorrichtung nach Anspruch 4 oder 5, wobei die Übertragungszeit-Steuereinrichtung des Weiteren umfasst:

eine Eingabeeinrichtung zum Eingeben des vorgegebenen Zeitabschnitts von außen, um den vorgegebenen Zeitabschnitt zu bestimmen; und

eine Zeitablauf-Steuereinrichtung zum Erzeugen der vorgegebenen Zeitablauf-Signale nach dem vorgegebenen Zeitabschnitt.

7. Verfahren nach Anspruch 5, wobei der vorgegebene Zeitabschnitt von einer Bedienungsperson bestimmt wird.

8. Vorrichtung nach Anspruch 2 oder Verfahren nach Anspruch 3, wobei das vorgegebene Modus-Signal anzeigt, ob die Daten im NTSC-Modus vorliegen.

9. Vorrichtung nach Anspruch 2 oder Verfahren nach Anspruch 3, wobei das vorgegebene Modus-Signal anzeigt, ob die Daten im PAL-Modus vorliegen.

10. Vorrichtung nach Anspruch 2 oder Verfahren nach Anspruch 3, wobei der vorgegebene Zeitabschnitt 125 μs beträgt.

11. Vorrichtung nach Anspruch 2, wobei der Zeitablauf-Simulator Übertragungs-Basissignale entsprechend den vorgegebenen Signalen und dem Modus-Signal ausgibt, um einen Strom der Quellen-Pakete zu übertragen, wobei die vorgegebenen Signale und das Modus-Signal vorbestimmte Signale und nicht neu eingegebene Signale sind.

12. Vorrichtung nach Anspruch 2, wobei gemäß den vorgegebenen Regeln, wenn eine Zyklus-Synchronisierung in einem Übertragungs-Basissignalintenrall auftritt, ein Paket mit Quellen-Paketdaten, das in der Zyklus-Synchronisierung gültig ist, zu der Zyklus-Synchronisierung übertragen wird, und, wenn zwei, Zyklus-Synchronisierungen in einem Übertragungs-Basissignalintervail auftreten, ein Paket mit Quellen-Paketdaten zu lediglich einer der zwei Zyklus-Synchronisierungen übertragen wird und ein leeres Paket ohne Daten zu der anderen Zyklus-Synchronisierung übertragen wird.

13. Vorrichtung nach Anspruch 12 oder Verfahren nach Anspruch 3, wobei das Übertragungsbasis-Signalintervall ein Zyklus-Intervall ist, das ein Zeitbruchteil eines Rahmens ist, der im NTSC-Modus in 250 unterteilt wird.

14. Vorrichtung nach Anspruch 12 oder Verfahren nach Anspruch 3, wobei das Übertragungsbasis-Signalintervall ein Zyklus-Intervall ist, das ein Zeitbruchteil eines Rahmens ist, der im PAL-Modus in 300 unterteilt wird.

15. Vorrichtung nach Anspruch 1 oder Verfahren nach Anspruch 3, wobei der Übertragungsstandard der Standard IEEE 1394 ist.

16. Verfahren nach Anspruch 3, wobei der Schritt des Aüsgebens von Übertragungs-Basissignalen einen Schritt zum Ausgeben von Übertragungs-Basissignalen entsprechend den vorgegebenen Signalen und den Modus-Signalen zum Übertragen eines Stroms der Quellen-Pakete einschließt, und die vorgegebenen Signale sowie die Modus-Signale vorbestimmte Signale und nicht neu eingegebene Signale sind.

## Revendications

1. Dispositif pour transmettre des données numériques audio et vidéo, transmettant un train de paquets de source d'un premier dispositif numérique à un second dispositif numérique conformément à une spécification de transmission dans un mode de transmission isochrone, et comprenant:

une mémoire (53) destinée à stocker les paquets de source;

**caractérisé par**:

des moyens de commande de temps de transmission (51, 52) destinés à commander un moment dans le temps pour transmettre des paquets de source et des paquets vides afin de convertir le cadencement de transmission d'un bus interne du premier dispositif numérique en un cadencement prédéfini dans la spécification de transmission; et
des moyens de transmission (54) destinés à insérer et à transmettre les paquets vides sous le contrôle desdits moyens de commande de temps de transmission (51, 52) pendant que les paquets de source stockés dans ladite mémoire (53) sont transmis conformément à des signaux de commande.

2. Dispositif selon la revendication 1, dans lequel lesdits moyens de commande de temps de transmission comprennent:

un simulateur de cadencement (51) destiné à recevoir des signaux prédéterminés et un signal de mode prédéterminé afin de transmettre un train des paquets de source, et à fournir des signaux de base de transmission correspondant aux signaux prédéterminés et au signal de mode; et

un régisseur de cadencement de transmission (52) destiné à recevoir les signaux de base de transmission et des signaux de synchronisation de cycle générés à chaque intervalle de temps prédéterminé, et à générer une sortie contrôlée afin de transmettre les paquets conformément à des règles prédéterminées.

3. Procédé pour transmettre un train de paquets de source d'un premier dispositif numérique à un second dispositif numérique conformément à une spécification de transmission dans un mode de transmission isochrone, comprenant les étapes de:

réception de signaux de cadencement prédéterminés obtenus à partir du cadencement de transmission d'un bus interne du premier dispositif numérique et un signal de mode prédéterminé afin de transmettre ledit train des paquets de source, et fourniture de signaux de base de transmission correspondant auxdits signaux prédéterminés et audit signal de mode; et

réception desdits signaux de base de transmission et de signaux de synchronisation de cycle générés à chaque période de temps prédéterminée, et transmission desdits paquets de source et de paquets vides conformément à des règles prédéterminées,

dans lequel, conformément auxdites définitions prédéterminées, lorsqu'un seul signal de synchronisation de cycle intervient au cours d'un intervalle de signal de base de transmission, un paquet comportant des données de paquet de source valide pendant le signal de synchronisation de cycle est transmis lors du signal de synchronisation de cycle, tandis que lorsque deux signaux de synchronisation de cycle interviennent au cours d'un intervalle de signal de base de transmission, un paquet comportant des données de paquet de source est transmis lors d'un seul des deux signaux de synchronisation de cycle, et un paquet vide sans données est transmis lors de l'autre signal de synchronisation de cycle.

4. Dispositif selon la revendication 2 ou procédé selon la revendication 3, dans lequel lesdits signaux de cadencement prédéterminés sont générés au bout d'un intervalle de temps prédéterminé après qu'un signal indiquant qu'un premier paquet de source commence à être transmis au cours d'une trame du bus interne du premier dispositif numérique, a été généré.

5. Dispositif selon la revendication 4 ou procédé selon la revendication 4, dans lequel ledit intervalle de temps prédéterminé est un intervalle de temps nécessaire pour stocker l'un des paquets de source dans ladite mémoire, c'est-à-dire un intervalle de temps nécessaire pour charger les paquets de source dans ladite mémoire afin de les mettre en mémoire tampon.

6. Dispositif selon la revendication 4 ou 5, dans lequel lesdits moyens de commande de temps de transmission comprennent en outre:

des moyens d'entrée destinés à recevoir en entrée ledit intervalle de temps prédéterminé de l'extérieur afin de déterminer ledit intervalle de temps prédéterminé; et

des moyens de commande de cadencement destinés à générer lesdits signaux de cadencement prédéterminés après ledit intervalle de temps prédéterminé.

7. Procédé selon la revendication 5, dans lequel ledit intervalle de temps prédéterminé est déterminé par un opérateur.

8. Dispositif selon la revendication 2 ou procédé selon la revendication 3, dans lequel ledit signal de mode prédéterminé indique si les données sont en mode NTSC (Comité national des normes de télévision).

9. Dispositif selon la revendication 2 ou procédé selon la revendication 3, dans lequel ledit signal de mode prédéterminé indique si les données sont en mode PAL (ligne à phase alternante).

10. Dispositif selon la revendication 2 ou procédé selon la revendication 3, dans lequel ledit intervalle de temps prédéterminé est de 125 $\mu$s.

11. Dispositif selon la revendication 2, dans lequel ledit simulateur de cadencement fournit des signaux de base de transmission correspondant auxdits signaux prédéterminés et audit signal de mode pour transmettre un train des paquets de source, lesdits signaux prédéterminés et ledit signal de mode étant des signaux prédéfinis et non des signaux nouvellement introduits.

12. Dispositif selon la revendication 2, dans lequel, conformément auxdites règles prédéterminées, lorsqu'un seul signal de synchronisation de cycle intervient au cours d'un intervalle de signal de base de transmission, un paquet comportant des données de paquet de source valide pendant le signal de synchronisation de cycle est transmis lors du signal de synchronisation de cycle, tandis que lorsque deux signaux de synchronisation de cycle interviennent au cours d'un intervalle de signal de base de transmission, un paquet comportant des données de paquet de source est transmis lors d'un seul des deux signaux de synchronisation de cycle, et un paquet vide sans données est transmis lors de l'autre signal de synchronisation de cycle.

13. Dispositif selon la revendication 12 ou procédé selon la revendication 3, dans lequel ledit intervalle de signal de base de transmission est un intervalle de cycle qui représente un fragment de temps d'une trame divisée en 250 en cas de mode NTSC.

14. Dispositif selon la revendication 12 ou procédé selon la revendication 3, dans lequel ledit intervalle de signal de base de transmission est un intervalle de cycle qui représente un fragment de temps d'une trame divisée en 300 en cas de mode PAL.

15. Dispositif selon la revendication 1 ou procédé selon la revendication 3, dans lequel ladite spécification de transmission est l'IEEE 1394.

16. Procédé selon la revendication 3, dans lequel ladite étape de fourniture de signaux de base dé transmission comprend une étape de fourniture de signaux de base de transmission correspondant auxdits signaux prédéterminés et auxdits signaux de mode pour transmettre un train desdits paquets de source, lesdits signaux prédéterminés et lesdits signaux de mode étant des signaux prédéfinis et non des signaux nouvellement introduits.

# Fig. 1

# Fig. 2

# Fig. 3

# Fig. 4

# Fig. 6

# Fig. 5

EP 0 873 019 B1

F_st_d → **Timing Simulator** 51

Mode → 

Transmission basis signals

Cycle sync →

**Transmission timing controller** 52

Controlled output

Data → **Memory** 53

Control signals

Data

**Transmitter** 54

→ IEEE 1394 Data packet stream

# Fig. 7